# EUROPEAN PATENT APPLICATION

(11) **EP 1 016 835 A2**
(43) Date of publication of application: **05.07.2000**
(21) Application number: 99124109.2
(22) Date of filing: 02.12.1999
(51) Int. Cl.: F24J 2/46

(54) **Hydraulic connection system for modules of solar collectors and modular solar collectors**

(30) Priority: 18.12.1998 IT MI982731
(71) Applicant: Pullini, Giuseppe, 20128 Milano (IT)
(72) Inventor: Pullini, Giuseppe, 20128 Milano (IT)

(57) **Abstract**

The invention relates to a Hydraulic connection system for modules of modular solar collectors (1, 2, 3, 4, 9) wherein a certain quantity of push-fit fitting (5), suitable to be fitted to inlet and outlet pipes (9) of single modules (1, 2, 3, 4, 9) are provided, such push-fit fittings being hydraulically connected each other by means of flexible pipes (6)

## Description

Object of present invention is a hydraulic connection system for modules of solar collectors and a solar collector that includes such hydraulic connection system.

From Italian patent N^{o} 1.844.479, in the name of Giuseppe PULLINI and Giovanni BEVERINA, is known how to manufacture solar collectors assembling, mechanically, a certain quantity of modules of solar collector, and then hydraulically connecting such modules to each other.

Particularly, following the instructions of the above mentioned patent, each solar module consists of a radiant energy absorber (typically a metallic absorbing surface that includes a channel open on both ends) inserted in a "U"-shaped profile, which is covered on the upper side by a plate of transparent material and closed in the extremities by two covers, such covers being made with holes for the passage of inlet and outlet pipes connected to the absorber channel.

Such "U"-shaped profiles are then mechanically joined each other (i.e. by means of fasteners), to carry out a solar collector with the requested dimensions and shape.

The extremities of inlet and outlet pipes joined to the absorber are then connected to distribution pipes, crosswise to such extremities.

The manufacturing method for solar collectors, described in patent N^{o} 1.284.479, even if represents a remarkable development in the construction philosophy of solar collectors, on the other side still shows some problems related to the hydraulic connection of the modules.

The protruding extremities of inlet and outlet pipes of absorbers, that in ideal conditions should be all put in a row, usually show remarkable differences in the alignment, on the three Cartesian axes.

Such differences can be due to the conformation of the surface on which each module is fixed, tolerances in dimension and shape of single module, inaccuracy in the assembly of modules.

Such imprecision, practically inevitable, make difficult the hydraulic connection between the inlet and outlet extremities of absorbers and the pipes for the distribution and respectively the collection of water from the absorbers.

Moreover the hydraulic connection between modules needs specific tools, long time of working and skill operators.

Because the solar modules profiles are preferably made of plastic, the presence of near heating sources for welding processes can cause considerable damage to the collector module itself.

Furthermore, it is necessary not to forget that usually the installation of such solar modules is foreseen on the roof of the buildings, that means uncomfortable and dangerous working place, where even the operation that seems to be the most simple appears difficult and heavy.

An other problem that has been funded, typically when absorbers of modules are made of aluminium, is the difficulty to connect the pipes using welding technology.

A further problem that occurs during the hydraulic connecting operations between solar collector modules is the really small space in the ^{"}U"-shaped profile used for the production of modules, when pipes are connected inside in the profile.

If connections are made externally, this cause an unpleasant esthetical effect and needs an adequate thermal insulation of such made connections.

Aim of present invention is to solve, at least partially, the mentioned problems.

Specifically, a purpose of present invention is to propose a technical solution that allows to carry on, in sure and fast way, in the installation place, without tools and without the necessity of skilled operators, the hydraulic connection between single modules of collector.

Another purpose of present invention is to offer a hydraulic connection system between collector modules suitable to guarantee a reliable seal also in changeable climatic conditions.

One more purpose of the present invention is to propose a hydraulic connection system between collector modules that costs less than the ones used at present.

Such aim and these purposes of present invention are reached by means of a hydraulic connection system for solar collector modules in accordance with the wording of the independent claim 1, or rather by means of a modular solar collector according to the wording of the independent claim 4 Preferred embodiments of the hydraulic connection system for modular solar collectors and of the modular solar collector that implements such hydraulic connection system can be realised according to the wording of the dependent claims.

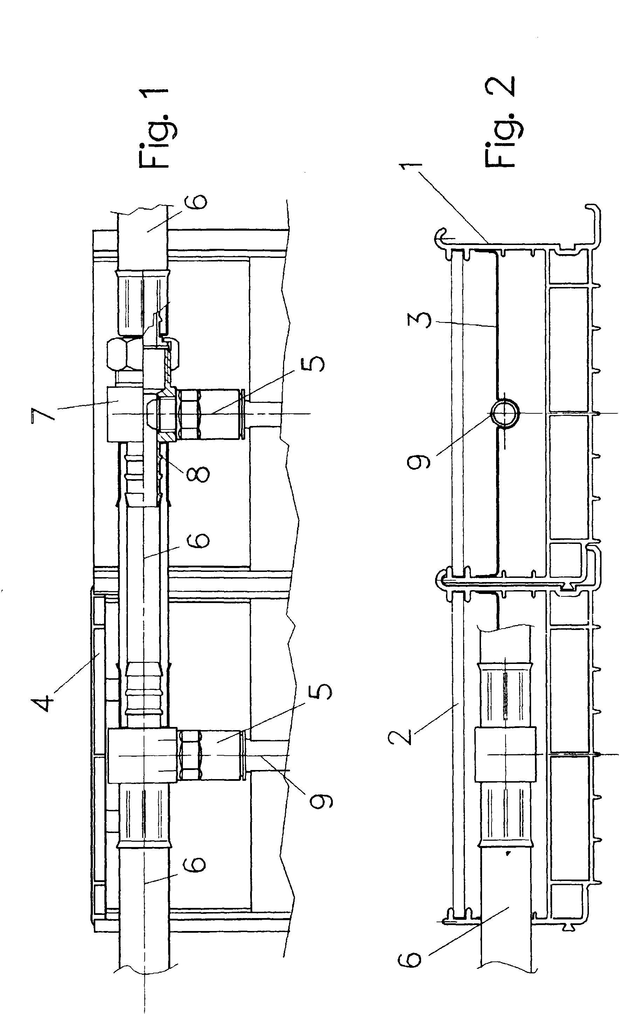

A preferred embodiment of present invention is described here below, with reference to the attached drawing, where:
- Drawing N^{o} 1 shows a top view, partially in section, of a portion of a modular solar collector that includes the hydraulic connection system, object of present invention; and
- Drawing N^{o} 2 shows a front view, partially in section, of same modular solar collector, including the hydraulic connection system, object of present invention.

With reference to the attached drawing, numbers 1, 2, 3 and 4 show a solar collector module including an absorber 3, located in a cavity of a profile 1, that is closed on the top with a plate 2, and at the extremities with covers 4.

The collector modules are assembled in a range one joined to the other by means of a fastening system (shown in the drawing).

The collector modules have also a hydraulic connection that put into communication the absorbers 3 of the collector modules.

In the preferred embodiment such connection is parallel type, anyhow it will be possible to carry out also serial or serial/parallel connections, according to the needs.

A characteristic of the hydraulic connection for modular solar collector modules, according to the invention, is that there are a number of push-fit fittings 5, suitable to be applied to the single module inlet and outlet pipes 9, and that such push-fit fittings are hydraulically joined each other by means of flexible tubes 6.

In a possible embodiment the tubes 6 will be made in corrugated metallic pipes or plastic pipes or rubber, flexible.

According to the illustrated embodiment of the hydraulic connection system, each push-fit fitting 5 is the central element of a "T" connector 7.

The sides of such "T" connector can be rubber-holder, threaded union or any other means that allow to join fast and seal the flexible pipe 6.

Of course, the flexible pipes 6 could be assembled also by means of welding, chamfering or rolling technologies.

An advantage of the described hydraulic connection system is the possibility to positioning the push-fit fittings 5 inside in the profile 1, while the flexible pipes 6 pass trough proper openings, made on the sides of the profile 1.

This embodiment allows, in particular, to reduce the esthetical effect of the hydraulic connection system on modular solar collector and furthermore allows to reduce the heat loss from the hydraulic connection system, without the need to use expensive and difficult solutions for thermal insulation of the collector modules connection pipes.

The expert reader will immediately understand the remarkable advantages that the described hydraulic connection system can introduce in the assembly of the modular solar collectors.

The use of push-fit fittings 5 allows to carry out the connection between each collector module and the distributing pipe in a reliable way and without supplementary operations.

The use of flexible pipe 6 allows, on the other side, to compensate easily the mistakes occurred in the positioning of the extremities of the absorbers inlet and outlet pipes 3.

Besides, The use of flexible pipes 6 allows to fit one at the time the single push-fit fittings 5, with a drastic reduction of the effort necessary to carry on the connection.

Furthermore, the expert will notice that the proposed solution gives a remarkable reduction in the timing necessary for the hydraulic connection and that such hydraulic connection can be carried out without any tool.

It is also evident that the hydraulic connection system, according to the proposed solution, does not give any problem in the choice of the materials used for the absorber pipes 3.

The expert, in the light of present teaching, can foresee, in an obvious manner, technically equivalent solutions, that consequently fall within the extent of protection of the enclosed claims.

In particular, forms, dimensions, and materials could change, according to the needs and circumstances, without go away from the scope of the claims.

## Claims

1. Hydraulic connection system for modules of modular solar collectors (1, 2, 3, 4, 9),
characterised in that a certain quantity of push-fit fittings (5), suitable to be fitted to inlet and outlet pipes (9) of single modules (1, 2, 3, 4, 9) are provided, such push-fit fittings being hydraulically connected each other by means of flexible pipes (6).

2. Hydraulic connection system, according to the claim 1,
wherein each push-fit fitting is the central element of a "T" connector (7).

3. Hydraulic connection system, according to the claim 2,
wherein the side elements (8) of such "T" connector are rubber-holder or threaded unions.

4. Hydraulic connection system, according to the claim 2, wherein such flexible pipes (6) are joined to such "T" connector by means of chamfering, rolling or welding.

5. Modular solar collector characterised in that a hydraulic connection system according to one of the claims from 1 to 4 is provided.

6. Modular solar collector, according to claim 5, in which each module include a hollow profile, suitable to contain at least one absorbing element (3), such hollow profile being closed with a transparent plate on the top (2) and two covers on each opposite side (4).

7. Modular solar collector, according to the claim 6, characterised in that the push-fit fittings are located inside in the hollow profile, while the flexible pipes (6) pass through the sides of such profile (1).

8. Modular solar collector that includes a hydraulic connection system as shown and described.
